# EUROPEAN PATENT SPECIFICATION

(11) **EP 2 955 563 B1**
(45) Date of publication and mention of the grant of the patent: **26.02.2020**
(21) Application number: 14171944.3
(22) Date of filing: 11.06.2014
(51) Int. Cl.: G02B 27/01, B60R 11/00, B60K 35/00

(54) **Head-up display system with a drive mechanism to move a combiner**
Head-Up-Anzeigesystem mit Antriebsmechanismus zum Bewegen eines Kombinators
Système d'affichage tête haute comportant un mécanisme d'entraînement pour déplacer un combineur

(43) Date of publication of application: 16.12.2015
(73) Proprietor: Jabil Circuit, Inc., St. Petersburg, Florida 33716 (US)
(72) Inventor: Hack, Gottfried, 3040 Neulengbach (AT); Potakowskyj, Christoph, 1100 Wien (AT)
(74) Representative: Schwarz & Partner Patentanwälte OG

(56) References cited:
- EP-A2- 2 477 058
- WO-A1-2007/137998
- DE-C- 430 716
- US-A1- 2008 239 523
- US-A1- 2013 100 533

## Description

The present invention concerns a head-up display system usable for traffic applications such as in automobiles according to the preamble of claim 1.

A head-up display or HUD is a transparent display panel that presents information to a user without requiring users to look away from a preferred viewing direction. The origin of the name stems from a pilot being able to view information with the head positioned "up" and looking forward, instead of angled down looking at lower instruments. Although they were initially developed for military aviation, HUD systems are nowadays used in commercial aircraft, automobiles, and other applications.

For example a driver can view traffic and the road in front of the vehicle through the transparent panel of a HUD system that is attached to a dashboard close to a windshield of the vehicle. A typical HUD system comprises a combiner, a projector and a video data source such as a computer. The combiner is typically an angled flat piece of glass or plastic located directly in front of the viewer that redirects the projected image from the HUD projector in such a way as to see the field of view and the projected image at the same time. Combiners may have special coatings that reflect the monochromatic light projected onto it from the projector unit while allowing all other wavelengths of light to pass through. In some optical layouts combiners may also have a curved surface to refocus the image from the projector. A combiner is comparable to a semi-transparent mirror. The HUD projector is usually mounted above or below the combiner. The computer provides the interface between the HUD projector and the systems or data to be displayed and generates the imagery and symbology to be displayed by the HUD projector towards the combiner which then further projects the images to the user.

Combiner positioning mechanisms for a HUD system which can be moved between a storage position and an operating position are known in the art. For example such a combiner is disclosed in document WO 2013/004611 A1. In this design the combiner is stored in a housing when in a storage position and protected by a cover in its closed position. A drive mechanism of the HUD moves the combiner around a combiner axis from the storage position to the operating position to project out of the vehicle's dashboard. A planetary gearing is used to at the same time turn and slide the cover from its open position to its closed position. This known HUD system comprises a housing with a substantial volume due to the open position of the cover within the housing. This makes it difficult to design this HUD system into a dashboard as a lot of other devices have to be fed into it as well and volume available for the housing is restricted.

The document WO 2007/137998 A1 discloses a cover device for moving a cover from its closed position into its open position, wherein in the open position of the cover a monitor can be pivoted from a storage position into an operating position by a combined drive mechanism comprising gearwheels and levers. The design of this known cover device is very complex and space-consuming and thus it's housing reaches quite deep into the dashboard what makes it difficult to design this HUD system into a dashboard.

The document US 8,619,369 B2 discloses a HUD system with a combiner linear movable in a direction perpendicular to the surface of the dashboard from its storage position into its operating position and with a cover pivoted around a cover axis to move the cover from its closed position to its open position. The housing of this known HUD system reaches quite deep into the dashboard what makes it difficult to design this HUD system into a dashboard.

The document US 2013/100533 A1 discloses a HUD system with a combiner that is approximately linearly movable in a direction perpendicular to the surface of the dashboard from its storage position into its operating position and with a cover, wherein the combiner is moved by a rotational drive mechanism comprising a motor driven gearwheel. The design of this known HUD system is space-consuming and thus it's housing reaches quite deep into the dashboard what makes it difficult to design this HUD system into a dashboard.

The document EP 2 477 058 A2 discloses a HUD system with a combiner that is approximately linearly movable from its storage position into its operating position, wherein the combiner is moved by a rotational drive mechanism comprising two motor driven control discs. The design of this known HUD system is space-consuming and thus it's housing reaches quite deep into the dashboard what makes it difficult to design this HUD system into a dashboard.

The aim of the invention is to provide a HUD system that overcomes the disadvantages of the HUD systems known in the art. This problem is solved by a head-up display with a combiner according to the preamble of claim 1 with the features of the characterizing part of claim 1. The subjects of the dependent claims concern further advantageous embodiments of the invention.

According to the invention a head-up display system comprises a rotational drive mechanism that comprises a motor that drives a motor driven gearwheel that comprises a curved guiding member on its end face to guide a driver pin along a curve which driver pin engages with the combiner to pivot the combiner between its operating position and its storage position. This rotational drive mechanism with the curved guiding member and the driver pin is a mechanically simple and robust solution that enables to move the combiner in a swivelling movement between its operating position and its stored position. This enables a flat housing of the HUD that is easy to design into a dashboard.

In another preferred design of the HUD according to the invention the curved guiding member of the motor driven gearwheel comprises a degressive curve to enable self-locking of the combiner in the operating position. This design has the advantage that the combiner is very robust fixed in its operating position to avoid vibrations of the combiner and distortions of the information projected on the combiner.

According to a further embodiment of the head-up display system according to the invention the HUD comprises a drive mechanism to move the cover between its open position and its closed position, which drive mechanism comprises a main lever and a support lever that is pivoted with a moving end to the main lever and with a fixed end to the housing, wherein the main lever is pivoted with a cover end to the cover and with a driver end to the rotational drive mechanism to drive an essential linear movement of the cover end of the main lever during the movement of the cover between its open position and its closed position. This drive mechanism with the main lever and the support lever is a mechanically simple and robust solution that enables to move the cover in a linear movement between its closed position and its open position. This enables a flat housing of the HUD that is easy to design into a dashboard.

Particularly advantageous is to arrange the main lever and the support lever of the drive mechanism essentially in a parallel plane to the cover in its open position and its closed position. This enables to furthermore reduce the volume of the housing and eases to design the HUD into a dashboard of a car or airplane.

A further advantageous alternative of the invention is realized in a way that the cover is slideable along a curved guiding member in a guiding direction between the open position and the closed position of the cover while the pivot to connect the main lever with the cover is slidable in essentially a vertical direction to the guiding direction. This ensures to avoid side forces causing friction between the guiding member and the cover and enables a smooth movement of the cover without situations of jam.

In a further development of the invention the curved guiding member is built to lower the position of the cover at the beginning of the movement from the closed position to the open position and after that to move the cover in an essential linear movement. This enables a uniform surface of the dashboard with the cover in its closed position and an overall flat housing of the HUD system.

Particularly advantageous is the driver mechanism with a motor driven gearwheel meshing with a lever gearwheel with an area of their perimeter without meshing to disconnect the motor driven gearwheel from the lever gearwheel. This has the advantage that the driver mechanism only needs a single motor to drive the cover and the combiner into their different positions.

It is furthermore advantageous that the lever gearwheel and/or the motor driven gearwheel comprise one compared to the other teeth of the gearwheel large tooth as a first tooth at the end of the area without teeth to enable smooth interconnection of the teeth of the lever gearwheel with the teeth of the motor driven gearwheel when connected again. This avoids a blocking situation of the gearwheels when connected again.

Advantageously the HUD system comprises a drive mechanism with the distance from the center of the lever gearwheel to the driver end of the main lever is L and the distance from the center of the lever gearwheel to the fixed end of the support lever is 2 times L and the distance from the driver end of the main lever to the moving end of the support lever is 2,5 times L and the distance from the moving end of the support lever to the cover end of the mail lever is 2,5 times L and the length of the support lever from its moving end to its fixed end is 2,5 times L. These particular dimensions enable a linear movement of the cover end of the main lever during the movement of the cover between its open position and its closed position.

Further details and advantages of the combiner positioning device in a head-up display according to the invention will become more apparent in the following description and the accompanying drawings.
Figure 1 is a perspective view of relevant parts of a head-up display (HUD) system with the cover in its closed position.
Figure 2 is a sectional view of the HUD system of Figure 1 with the cover in its closed position.
Figure 3 is a perspective view of relevant parts of the HUD system with the cover in its open position and its combiner in its operating position.
Figure 4 is a sectional view of the HUD system of Figure 3 with the cover in its open position and the combiner in its operating position.
Figure 5 is another perspective view of relevant parts of the HUD system with the cover in its closed position.
Figure 6 is a top view of the HUD system of Figure 5 with the cover in its closed position.
Figure 7 is another perspective view of relevant parts of the HUD system with the cover in a mid position between the open position and the closed position.
Figure 8 is a top view of the HUD system of Figure 7 with the cover in its mid position.
Figure 9 is another perspective view of relevant parts of the HUD system with the cover in its open position.
Figure 10 is a top view of the HUD system of Figure 9 with the cover in its open position.
Figure 11 is a transparent top view of the HUD system of Figure 6 with the cover in its closed position which displays some of the relevant parts hidden by other in grey shaded lines.
Figure 12 is a bottom view of the HUD system of Figure 1 with the cover in its closed position and comprises a detailed view of the cardan joint to connect the cover end of the main lever with the cover.
Figure 13 is a top view of the HUD system with removed cover close to its open position with meshed motor driven gearwheel and the lever gearwheel.
Figure 14 is a top view of the HUD system with removed cover in its open position with still meshed motor driven gearwheel and the lever gearwheel.
Figure 15 is a detailed view of the motor driven gearwheel and the lever gearwheel of the HUD system of Figure 14 that shows the further curved guiding member of the motor driven gearwheel.
Figure 16 is a top view of the HUD system with removed cover in its open position while the motor driven gearwheel and the lever gearwheel are not meshed.
Figure 17 is a detailed view of the motor driven gearwheel and the lever gearwheel of the HUD system of Figure 16 that shows the further curved guiding member of the motor driven gearwheel.

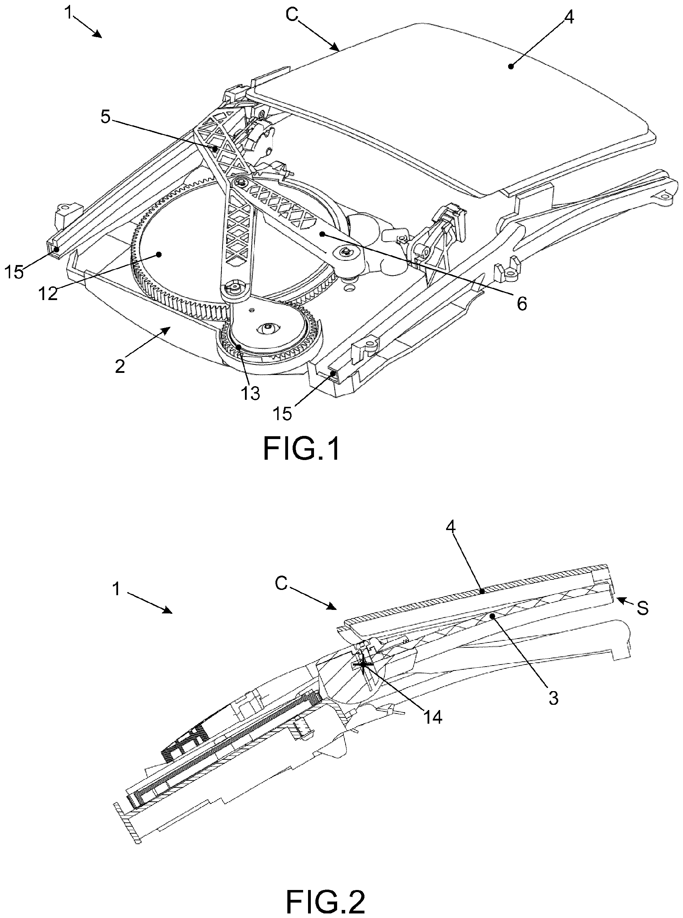

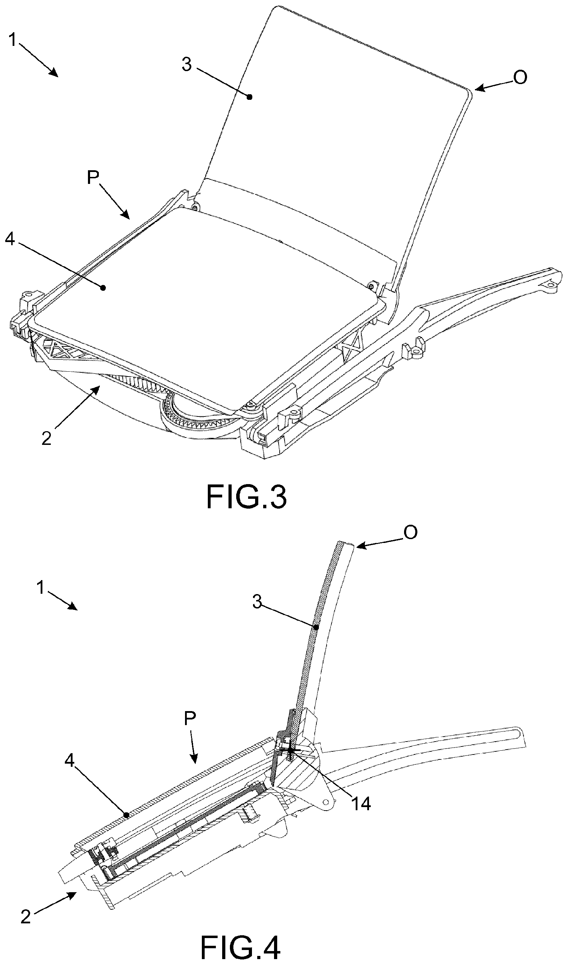

Figure 1 shows relevant parts of a head-up-display (HUD) system 1 in a perspective view without its protective housing to be integrated within a dashboard of an automobile. The HUD system 1 comprises a drive mechanism 2 to pivot a combiner 3 between a storage position S, symbolized by a cursor S, and an operating position O, symbolized by a cursor O. In storage position S the combiner 3 is folded down or folded in, respectively, into a recess or internal space of the protective housing as shown in Figures 1 and 2. During operation of the vehicle the combiner 3 is folded out of the protective housing and set in its operating position O as shown in Figures 3 and 4. The combiner 3 is a transparent panel that includes optical coatings that reflect those specific wavelengths that are projected by a HUD projector which is not explicitly shown in the Figures. Also a video data source like a computer that is usually required to project information via the projector on the combiner 3 and thus enable proper function of the HUD system 1 is not shown in the Figures.

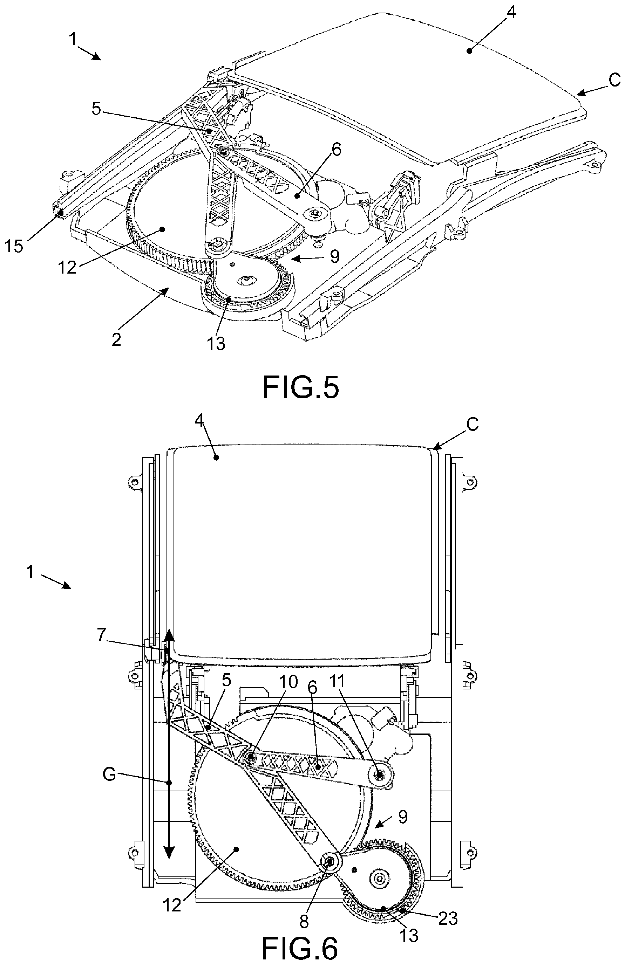

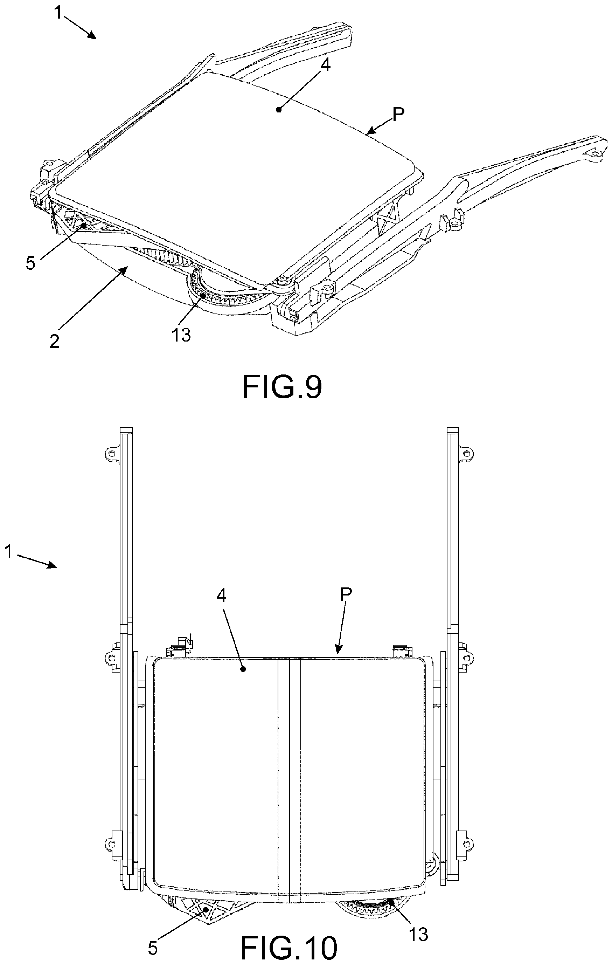

The HUD system 1 furthermore comprises a cover 4 to protect the combiner 3 in its storage position S to avoid scratches and dirt on the combiner 3. The drive mechanism 2 moves the cover 3 between a closed position C, symbolized by a cursor C, and an open position P, symbolized by a cursor P. The cover 4 in its closed position C protects the combiner 3 in its stored position S and the drive mechanism 2 first moves the cover 4 from its closed position C into its open position P and after that moves the combiner 3 from its stored position S into its operating position O to enable operation of the combiner 3. Figures 5 to 10 show this movement in three steps.

The drive mechanism 2 comprises a main lever 5 and a support lever 6 to transform a rotational movement of a motor, which is not shown in the Figures, of the drive mechanism 2 into a linear movement to move the cover 4 in a guiding direction G between its open position P and its closed position C. The main lever 5 comprises a cover end 7 to pivotable connect with the cover 4 and a driver end 8 to pivotable connect with a rotational drive mechanism 9 of the drive mechanism 2 as shown in Figure 6. The support lever 6 comprises a moving end 10 to pivotable connect to the main lever 5 and a fixed end 11 to pivotable connect to the housing of the HUD system 1.

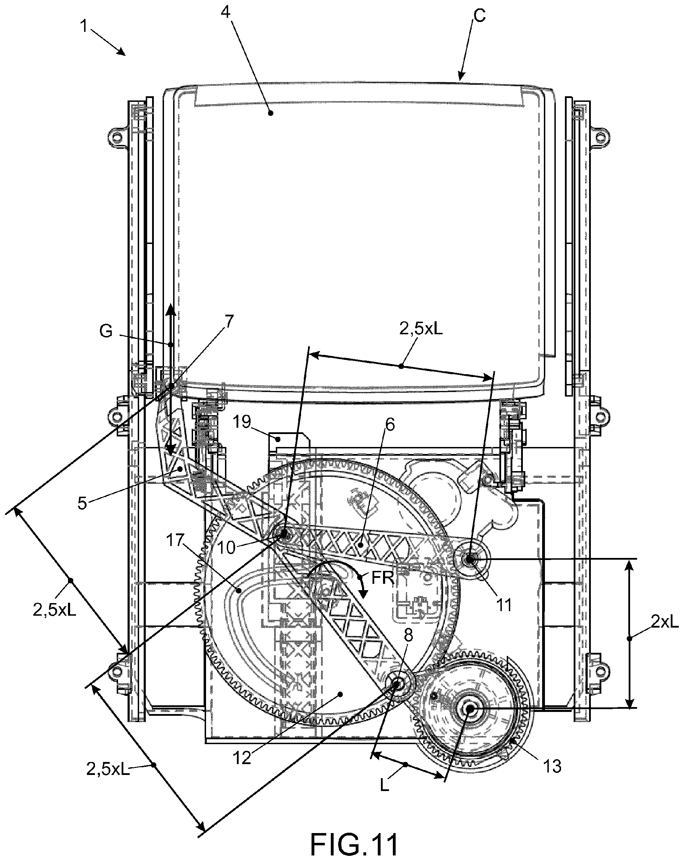

The rotational drive mechanism 9 comprises the motor that drives a motor driven gearwheel 12 meshing with a lever gearwheel 13 which is pivoted with the driver end 8 of the main lever 5. The HUD system 1 is realized with specific length and distance relations as shown in Figure 11 to enable the transformation of the rotational movement into the linear movement in the guiding direction G. The distance from the center of the lever gearwheel 13 to the driver end 8 of the main lever 5 is L, which represents a specific length like e.g. L = 5 centimetres. The distance from the center of the lever gearwheel 13 to the fixed end 11 of the support lever 6 is 2 times L and the distance from the driver end 8 of the main lever 5 to the moving end 10 of the support lever is 2,5 times L and the distance from the moving end 10 of the support lever 6 to the cover end 7 of the mail lever is 2,5 times L and the length of the support lever 6 from its moving end 10 to its fixed end 11 is 2,5 times L. These length and distance relations ensure a substantially linear movement of the cover end 7 of the main lever 5 and the cover 4 in the guiding direction G what enables a smooth transition of the cover 4 between its closed position C and its open position P. The length of L may be varied dependent on the size of the HUD system 1.

The combiner 3 of the HUD system 1 is pivoted between its operating position O and its storage position S around a combiner axis 14. The final angle of the combiner 3 in its operating position O may be adjustable by the user of the automobile to adjust it to the size of the user. The main lever 5 and the support lever 6 of the drive mechanism 2 are essentially in a parallel plane to the cover 4 in its open position P and its closed position C. This enables to reduce the volume of the housing of the HUD system 1 and eases to design the HUD system 1 into a dashboard of an automobile or airplane.

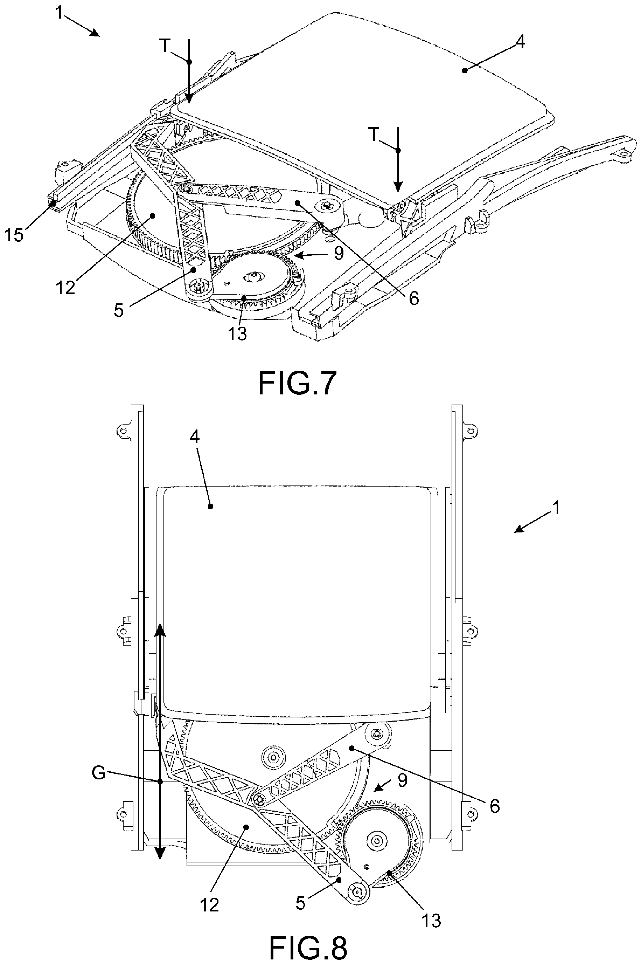

The cover 4 is slideable along a curved guiding member 15 in the guiding direction G between the open position P and the closed position C of the cover 4. This has the advantage that the cover 4 is guided in a robust and secure way. The curved guiding member 15 is built to lower the position of the cover 4 at the beginning of the movement from the closed position C to the open position P in a direction T, as shown in Figure 7, and after that to move the cover in an essential linear movement. This enables a uniform surface of the dashboard with the cover 4 in its closed position C and an overall flat housing of the HUD system 1.

A further substantial advantage of the construction of the HUD system 1 is that the cover 4 is only connected with the cover end 7 of the main lever 5 to the drive mechanism 2. This reduces the number of parts and cost of the HUD system 1.

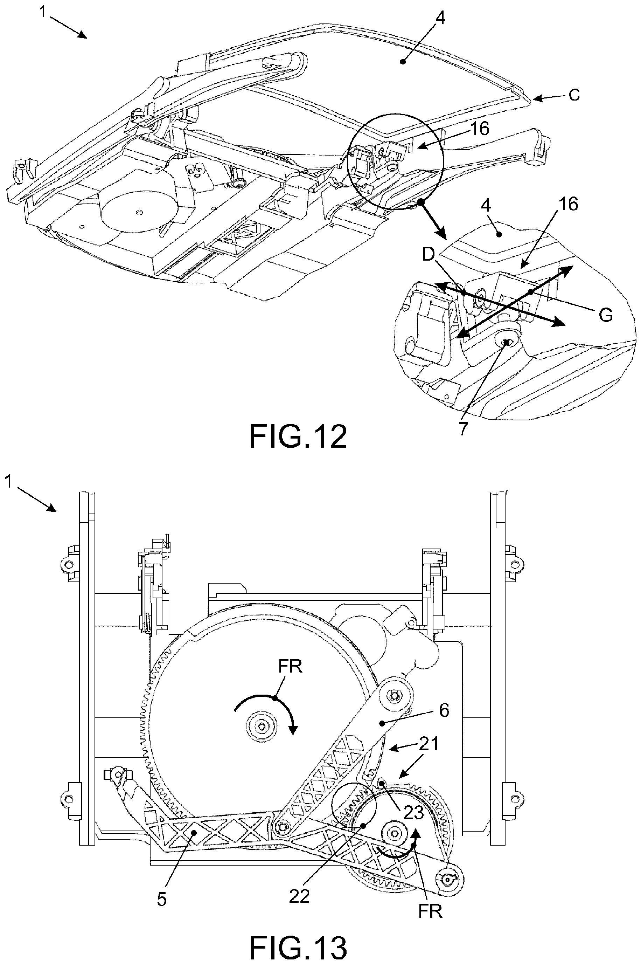

The pivot to connect the cover end 7 of the main lever 5 with the cover 4 is realized as cardan joint 16 shown in Figure 12. Figure 12 is a bottom view of the HUD system 1 of Figure 1 with the cover 4 in its closed position C and shows a detailed view of the cardan joint 16. The cardan joint 16 enables that the cover end 7 of the main lever 5 is slidable in a slide direction D essentially vertical to the guiding direction G in relation to the cover 4. This ensures to avoid side forces causing friction between the curved guiding member 15 and the cover 4 and enables a smooth movement of the cover 4 without situations of jam.

The motor driven gearwheel 12 of the HUD system 1 comprises a further curved guiding member 17 on its end face to guide a driver pin 18 along a curve as shown in Figures 11 and 15 and 16. The driver pin 18 engages via a combiner lever 19 with the combiner 3 to move the combiner 3 around the combiner axis 14 between its operating position O and its storage position S. The further curved guiding member 17 comprises a degressive curve in an area 20 to enable self-locking of the combiner 3 in its operating position O. This design has the advantage that the combiner 3 is very robust fixed in its operating position O to avoid vibrations of the combiner 3 and distortions of the information projected on the combiner 3.

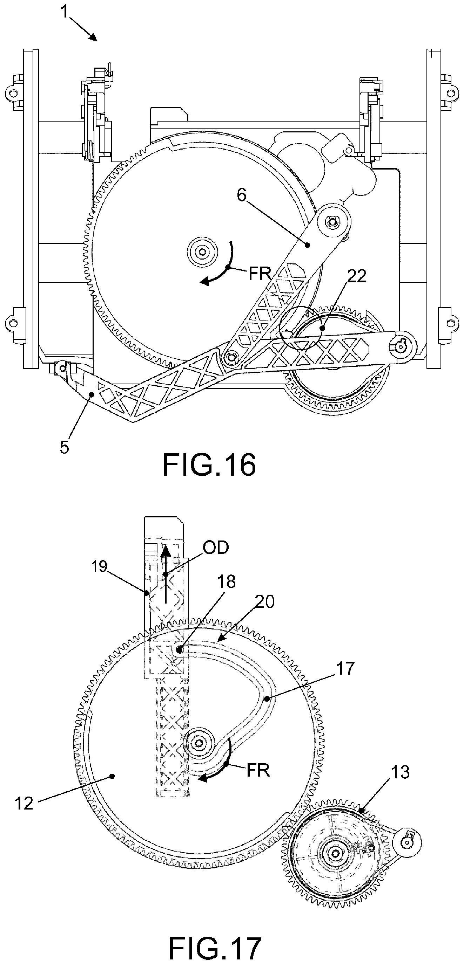

The motor driven gearwheel 12 and the lever gearwheel 13 comprise an area 21 of their perimeter without meshing to disconnect the motor driven gearwheel 12 from the lever gearwheel 13 as shown in Figures 16 and 17. This enables the drive mechanism 2 to move the combiner 3 between its operating position O and its storage position S without moving the cover 4. This mechanism will be explained based on Figures 13 to 17.

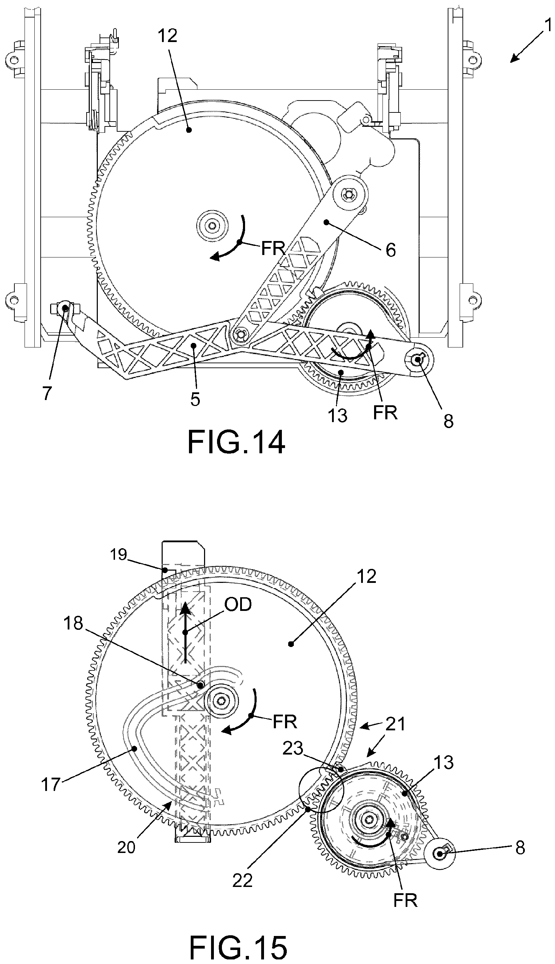

Figure 13 is a top view of the HUD system 1 with removed cover 4 close to its open position O with meshed motor driven gearwheel 12 and the lever gearwheel 13. The motor turns the motor driven gearwheel 12 in the first rotary direction FR to completely open the cover 4 and move the combiner 3 from its storage position S into its operating position O. The motor driven gearwheel 12 is meshed in an area 22 with lever gearwheel 13 and turns lever gearwheel 13 in its first rotary direction FR. In Figures 14 and 15 the cover end 7 of the main lever 5 reached its end position and the cover 4 its open position P while the area 21 of the perimeter of the motor driven gearwheel 12 and the lever gearwheel 13 without meshing is close to the area 22 where the motor driven gearwheel 12 and the lever gearwheel 13 still mesh.

Figure 15 is a detailed view of the motor driven gearwheel 12 and the lever gearwheel 13 of the HUD system 1 of Figure 14 that shows the further curved guiding member 17 of the motor driven gearwheel 12. While the motor driven gearwheel 12 turns in its first rotary directioin FR the driver pin 18 fixed to the combiner lever 19 is guided along further curved guiding member 17 what results in a linear movement of the combiner lever 19 in its opening direction OD.

Figure 16 is a top view of the HUD system 1 with removed cover 4 in its open position O while the motor driven gearwheel 12 and the lever gearwheel 13 are not meshed. The motor turned the motor driven gearwheel 12 further in its first rotary direction FR until the driver pin 18 reached the end of the further curved guiding member 17 and the combiner lever 19 pushed the combiner 3 into its operating position O as shown in Figures 4 and 17. This has the advantage that the driver mechanism 2 only needs a single motor to drive the cover 4 and the combiner 3 into their different positions.

To move the combiner 3 into its stored position S and the cover 4 into its closed position C the teeth of the motor driven gearwheel 12 and the lever gearwheel 13 need to be meshed again. The lever gearwheel 13 comprises one compared to the other teeth of the lever gearwheel 13 large tooth 23 as a first tooth at the end of the area 21 without teeth to enable smooth interconnection of the teeth of the lever gearwheel 13 with the teeth of the motor driven gearwheel 12 when connected again. This avoids a blocking situation of the gearwheels when connected again. In another embodiment the motor driven gearwheel 12 would comprise such a larger tooth to smoothen the interconnection of the teeth of the gearwheels. To move the combiner 3 into its stored position S and the cover 4 into its closed position C the motor turns the motor driven gearwheel 12 against the first rotary direction. The driver pin 18 moves along the further curved guiding member 17 what moves the combiner 3 from its operating position O into its stored position S. After that the motor driven gearwheel 12 and the lever gearwheel 13 mesh again and move the cover from its open position P into its closed position C.

## Claims

1. Head-up display system (1) comprising a housing, a combiner (3) to display information in an operating position (O), a cover (4) to protect the combiner (3), wherein the combiner (3), and a rotational drive mechanism (9) comprising a motor, a gearwheel (12) and a driver pin (18), wherein the combiner (3) is pivotable between the operating position (O) and a storage position (S) around a combiner axis (14) and wherein the cover (4) is movable between an open position (P) and a closed position (C) to protect the combiner (3) in its storage position (S) with the cover (4) in its closed position (C), **characterized in that** the motor is configured to drive said gearwheel (12), the gearwheel (12) comprises a curved guiding member (17) on its end face to guide said driver pin (18) along a curve which driver pin (18) engages with the combiner (3) to pivot the combiner (3) between its operating position (O) and its storage position (S), and the motor driven gearwheel (12) is arranged essentially in a parallel plane to the cover (4) in its open position (P).

2. Head-up display system (1) according to claim 1, **characterized in that** the driver pin (18) engages via a combiner lever (19) with the combiner (3) to pivot the combiner (3) around the combiner axis (14) between its operating position (O) and its storage position (S).

3. Head-up display system (1) according to any of the proceeding claims, **characterized in that** the curved guiding member (17) comprises a degressive curve (20) to enable self-locking of the combiner (3) in the operating position (O).

4. Head-up display system (1) according to any of the proceeding claims, **characterized in that** the cover (4) is slideable along a curved guiding member (15) in a guiding direction (G) between the open position (P) and the closed position (C) of the cover (4).

5. Head-up display system (1) according to claim 4, **characterized in that** the pivot to connect a main lever (5) with the cover (4) is slidable in essentially a direction (D) vertical to the guiding direction (G).

6. Head-up display system (1) according to claim 4 or claim 5, **characterized in that** the curved guiding member (15) is built to lower the position of the cover (4) at the beginning of the movement from the closed position (C) to the open position (P) and after that to move the cover (4) in an essential linear movement.

## Patentansprüche

1. Head-up-Anzeigesystem (1), umfassend ein Gehäuse, einen Kombinierer (3) zum Anzeigen von Informationen in einer Betriebsposition (O), eine Abdeckung (4) zum Schutz des Kombinierers (3), worin sich der Kombinierer (3) befindet, und einen Drehantriebsmechanismus (9), umfassend einen Motor, ein Zahnrad (12) und einen Mitnehmerstift (18), wobei der Kombinierer (3) zwischen der Betriebsposition (O) und einer Aufbewahrungsposition (S) um eine Kombiniererachse (14) herum schwenkbar ist und wobei die Abdeckung (4) zwischen einer offenen Position (P) und einer geschlossenen Position (C) bewegbar ist, um den Kombinierer (3) in seiner Aufbewahrungsposition (S) zu schützen, wobei sich die Abdeckung (4) in ihrer geschlossenen Position (C) befindet, **dadurch gekennzeichnet, dass** der Motor dazu konfiguriert ist, das Zahnrad (12) anzutreiben, das Zahnrad (12) ein gekrümmtes Führungselement (17) an seiner Endfläche umfasst, um den Mitnehmerstift (18) entlang einer Kurve zu führen, wobei der Mitnehmerstift (18) mit dem Kombinierer (3) in Eingriff kommt, um den Kombinierer (3) zwischen seiner Betriebsposition (O) und seiner Aufbewahrungsposition (S) zu verschwenken, und das motorgetriebene Zahnrad (12) im Wesentlichen in einer parallelen Ebene zu der Abdeckung (4) in deren offener Position (P) angeordnet ist.

2. Head-up-Anzeigesystem (1) gemäß Anspruch 1, **dadurch gekennzeichnet, dass** der Mitnehmerstift (18) über einen Kombiniererhebel (19) mit dem Kombinierer (3) in Eingriff kommt, um den Kombinierer (3) um die Kombiniererachse (14) herum zwischen seiner Betriebsposition (O) und seiner Aufbewahrungsposition (S) zu verschwenken.

3. Head-up-Anzeigesystem (1) gemäß einem der vorhergehenden Ansprüche, **dadurch gekennzeichnet, dass** das gekrümmte Führungselement (17) eine degressive Kurve (20) umfasst, um eine Selbstverriegelung des Kombinierers (3) in der Betriebsposition (O) zu ermöglichen.

4. Head-up-Anzeigesystem (1) gemäß einem der vorhergehenden Ansprüche, **dadurch gekennzeichnet, dass** die Abdeckung (4) entlang eines gekrümmten Führungselements (15) in einer Führungsrichtung (G) zwischen der offenen Position (P) und der geschlossenen Position (C) der Abdeckung (4) verschiebbar ist.

5. Head-up-Anzeigesystem (1) gemäß Anspruch 4, **dadurch gekennzeichnet, dass** der Zapfen zum Verbinden eines Haupthebels (5) mit der Abdeckung (4) im Wesentlichen in einer zur Führungsrichtung (G) vertikalen Richtung (D) verschiebbar ist.

6. Head-up-Anzeigesystem (1) gemäß Anspruch 4 oder Anspruch 5, **dadurch gekennzeichnet, dass** das gekrümmte Führungselement (15) so konstruiert ist, um die Position der Abdeckung (4) am Beginn der Bewegung von der geschlossenen Position (C) in die offene Position (P) abzusenken und die Abdeckung (4) danach in einer im Wesentlichen linearen Bewegung zu bewegen.

## Revendications

1. Système d'affichage tête haute (1) comprenant un boîtier, un combineur (3) pour afficher des informations dans une position de fonctionnement (O), un couvercle (4) pour protéger le combineur (3), dans lequel le combineur (3), et un mécanisme d'entraînement en rotation (9) comprenant un moteur, une roue dentée (12) et une broche d'entraînement (18), dans lequel le combineur (3) peut pivoter entre la position de fonctionnement (O) et une position de stockage (S) autour d'un axe de combineur (14) et dans lequel le couvercle (4) est mobile entre une position ouverte (P) et une position fermée (C) pour protéger le combineur (3) dans sa position de stockage (S) avec le couvercle (4) dans sa position fermée (C), **caractérisé en ce que** le moteur est configuré pour entraîner ladite roue dentée (12), la roue dentée (12) comprend un élément de guidage incurvé (17) sur sa face d'extrémité pour guider ladite broche d'entraînement (18) le long d'une courbe, laquelle broche d'entraînement (18) coopère avec le combineur (3) pour faire pivoter le combineur (3) entre sa position de fonctionnement (0) et sa position de stockage (S), et la roue dentée entraînée par moteur (12) est agencée essentiellement dans un plan parallèle au couvercle (4) dans sa position ouverte (P).

2. Système d'affichage tête haute (1) selon la revendication 1, **caractérisé en ce que** la broche d'entraînement (18) coopère par l'intermédiaire d'un levier de combineur (19) avec le combineur (3) pour faire pivoter le combineur (3) autour de l'axe de combineur (14) entre sa position de fonctionnement (O) et sa position de stockage (S).

3. Système d'affichage tête haute (1) selon l'une quelconque des revendications précédentes, **caractérisé en ce que** l'élément de guidage incurvé (17) comprend une courbe dégressive (20) pour permettre un auto-verrouillage du combineur (3) dans la position de fonctionnement (O).

4. Système d'affichage tête haute (1) selon l'une quelconque des revendications précédentes, **caractérisé en ce que** le couvercle (4) peut coulisser le long d'un élément de guidage incurvé (15) dans une direction de guidage (G) entre la position ouverte (P) et la position fermée (C) du couvercle (4).

5. Système d'affichage tête haute (1) selon la revendication 4, **caractérisé en ce que** le pivot pour relier un levier principal (5) au couvercle (4) peut coulisser dans une direction (D) essentiellement verticale par rapport à la direction de guidage (G).

6. Système d'affichage tête haute (1) selon la revendication 4 ou la revendication 5, **caractérisé en ce que** l'élément de guidage incurvé (15) est construit pour abaisser la position du couvercle (4) au niveau du début du déplacement de la position fermée (C) à la position ouverte (P), et ensuite pour déplacer le couvercle (4) dans un déplacement essentiellement linéaire.
